# EUROPEAN PATENT APPLICATION

(11) **EP 1 688 077 A2**
(43) Date of publication of application: **09.08.2006**
(21) Application number: 05111663.0
(22) Date of filing: 02.12.2005
(51) Int. Cl.: A47L 9/10

(54) **Vacuum Cleaner**

(30) Priority: 04.02.2005 KR 2005010690
(71) Applicant: SAMSUNG ELECTRONICS CO., LTD., Suwon-City, Kyungki-do (KR)
(72) Inventor: Ji, Jun Ho, Gyeonggi-Do (KR); Noh, Hyung Soo, Gyeonggi-Do (KR)
(74) Representative: Grey, Ian Michael

(57) **Abstract**

A vacuum cleaner which is hygienically usable. The vacuum cleaner includes a main body forming the external appearance thereof, a blowing fan for generating a suction force to allow external air including foreign substances to be sucked into the main body, and a nano particle generator for generating nano particles and dispersing the generated nano particles into the air sucked thereinto. Since the foreign substances accumulated in a main body of the vacuum cleaner or the air discharged to the outside are sterilized by means of the sterilizing power of the nano particles generated from the nano particle generator, the vacuum cleaner is hygienically usable.

## Description

The present invention relates to a vacuum cleaner having a dust collector.

Generally, a vacuum cleaner is an apparatus which sucks air containing foreign substances, such as dust, using suction force generated by a driving motor and a blowing fan installed therein, collects the dust from the air and then discharges the purified air to the outside atmosphere.

Korean Patent Application No. 10-1996-18278 discloses a conventional vacuum cleaner which includes a main body having a driving motor and a blowing fan installed therein for generating suction force, a brush head for agitating and lifting dust from a surface to be cleaned, an extension pipe, one end of which is connected to the brush head and includes a hand grip, and a connection hose connecting the other end of the extension pipe to the main body.

Foreign substances, such as dust, are collected in the main body of the vacuum cleaner. However, when the amount of the foreign substances accumulated in the main body exceeds a certain point,the cleaning capability of the vacuum cleaner is reduced. Accordingly, a user must periodically clean the inside of the main body to emptying the foreign substances accumulated therein, so that the vacuum cleaner can operate at maximum efficiency.

Some users leave the vacuum cleaner for a long time without emptying the main body which results in a considerable amount of foreign substances accumulating therein. This allows microorganisms or bacteria which have been sucked into the main body together with dust to propagate in the vacuum cleaner, making the vacuum cleaner unhygienic.

Therefore, it is an object of the present invention to provide a vacuum cleaner, which substantially alleviates or overcomes the problem mentioned above.

Accordingly, the present invention is characterised by a sterilising particle generator operable to sterilise air drawn into and/or discharged from the vacuum cleaner.

Preferably, the dust collector comprises an air-permeable bag into which air containing dust and foreign matter is drawn, and the sterilising particle generator is connected between an inlet to the dust collector and the outside of the dust collector. In a preferred embodiment, a fan is provided to draw air that has been discharged through the bag, through the sterilising particle generator and into the inlet to the dust collector.

Preferably, a sealing means is included in the inlet to the dust collector operable to seal the inlet to enable a dedicated dust collector sterilising operation to be performed in which the fan circulates air from the outside of the dust collector, through the sterilising particle generator and into the inlet to the dust collector.

In another preferred embodiment, the dust collector is a cyclone chamber. Preferably, the sterilising particle generator is disposed in an inlet to the cyclone chamber or alternatively, the sterilising particle generator is disposed in an outlet to the cyclone chamber.

Preferably, a suction conduit is connected to the dust collector to guide the flow of air thereto, comprising a hose, a handle and an extension pipe, wherein the sterilising particle generator is disposed within the suction conduit.

Advantageously, the sterilising particle generator comprises a housing having a chamber to receive a sterilising material, and a heater configured to heat the sterilising material. The sterilising material may be silver or also may be gold.

The present invention also provides a vacuum cleaner including a main body forming the external appearance thereof, a blowing fan to generate a suction force to allow external air including foreign substances to be sucked into the main body, and a nano particle generator to generate nano particles and to disperse the generated nano particles into the air sucked thereinto.

The vacuum cleaner may further include a dust collector to filter out the foreign substances contained in the air flowing by the blowing fan, and the dust collector preferably includes a foreign substance filter installed in a channel of the air blown by the blowing fan to filter out the foreign substances from the air passing therethrough.

The nano particle generator is preferably positioned in the main body such that the nano particle generator is communicated with an outlet and an inlet of the foreign substance filter, and a subsidiary blowing fan is conveniently provided in the main body to cause the air to flow from the outlet of the foreign substance filter to the inlet of the foreign substance filter through the nano particle generator.

A brush head contacting the surface of a place to be cleaned, an extension pipe connected with the brush head, and a connection hose made of an elastically deformable material to connect the extension pipe and the main body is preferably connected to the main body, and the nano particle generator is advantageously installed in the extension pipe to disperse the nano particle into air passing through the extension pipe.

A damper is preferably provided at the end of the connection hose to close one end of the connection hose close to the main body when it is necessary to sterilize the inside of the main body under the condition that the inside of the main body is not cleaned.

The dust collector preferably includes a cyclone chamber, an upper portion of which includes a cylindrical shape and a lower portion of which includes a conical shape, a suction pipe connected with the cyclone chamber in the tangential direction, and a discharge pipe positioned in a central part of the cyclone chamber in an axial direction.

The nano particle generator is conveniently positioned in the discharge pipe to disperse the nano particles into air discharged to the outside through the discharge pipe. Alternately, the nano particle generator may be positioned in the suction pipe to disperse the nano particles onto air supplied to the cyclone chamber through the suction pipe.

The nano particle generator preferably includes a material-receiving portion having a concave shape to receive a material used to generate the nano particles, and a heater is preferably positioned in the material-receiving portion, such that the heater contacts with the material received by the material-receiving portion, to generate heat to heat the material.

The present invention also provides a vacuum cleaner including a main body forming the external appearance thereof, a blowing fan to generate a suction force to allow external air including foreign substances to be sucked into the main body, a dust collector to filter out the foreign substances contained in the air flowing by the blowing fan, and a nano particle generator positioned at an inlet of the dust collector to generate nano particles and to disperse the generated nano particles into the air introduced into the dust collector.

The present invention further provides a vacuum cleaner including a main body forming the external appearance thereof, a blowing fan to generate a suction force to allow external air including foreign substances to be sucked into the main body, a dust collector to filter out the foreign substances contained in the air flowing by the blowing fan, and a nano particle generator positioned at an outlet of the dust collector to generate nano particles and to disperse the generated nano particles into the air discharged from the dust collector.

Preferred embodiments of the invention will now be described with reference to the accompanying drawings in which:
Figure 1 is a schematic view of a vacuum cleaner in accordance with a first embodiment of the present invention;
Figure 2 is a schematic sectional view of a dust collector of the vacuum cleaner in accordance with the first embodiment of the present invention;
Figure 3 is a schematic sectional view of a nano particle generator applied to the vacuum cleaner of the present invention;
Figure 4 is a schematic view of a vacuum cleaner in accordance with a second embodiment of the present invention;
Figure 5 is a schematic sectional view of a dust collector of a vacuum cleaner in accordance with a third embodiment of the present invention; and
Figure 6 is a schematic sectional view of a dust collector of a vacuum cleaner in accordance with a fourth embodiment of the present invention.

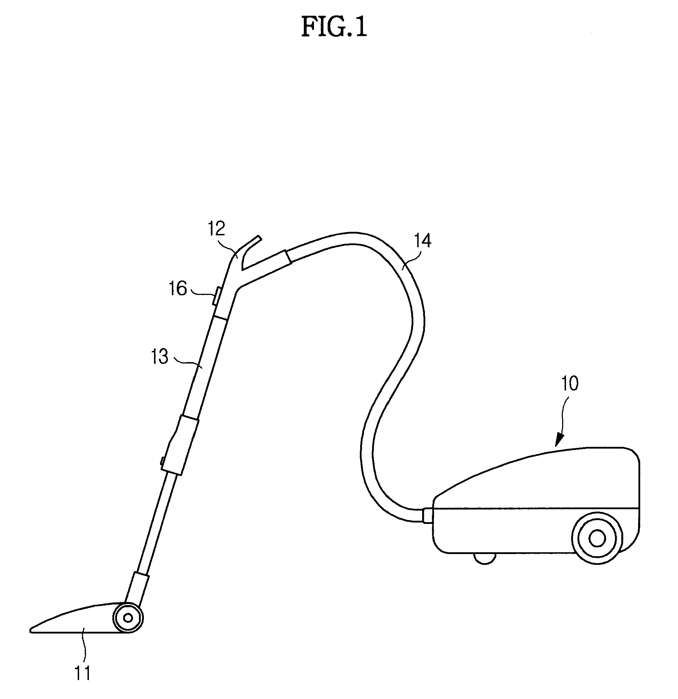

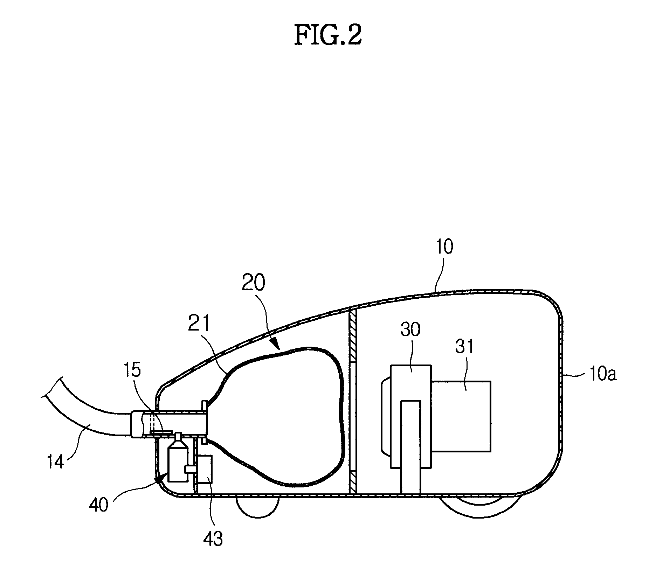

A vacuum cleaner in accordance a the first embodiment, is shown in Figures 1 and 2, and comprises a main body 10 a brush head 11 for contacting a surface to be cleaned and a hand grip 12 connected to the brush head 11 by an extension pipe 13. The extension pipe 13 is of a length which allows a user to move the brush head 11 comfortably whilst standing. A connection hose 14 connects to the hand grip 12 to the main body 10.

The main body 10 includes a dust collector 20 for filtering out the collected foreign substances. As shown in Figure 2, the dust collector 20 of this embodiment comprises a foreign substance filter 21 detachably connected with the connection hose 14 for filtering out the foreign substances from the air introduced into the main body 10 through the connection hose 14. A blowing fan 30 rotated by a driving motor 31 forces the air to outside of the main body 10 after the air including the foreign substances has been sucked into the dust collector and then the foreign substances filtered out. An outlet 10a, is formed through a rear portion of the main body 10 through which the expelled air is discharged. In this embodiment, the foreign substance filter 21 is a dust filtering sack, although the shape of the foreign substance filter 21 is not limited thereto, and may vary as necessary.

The brush head 11 comprises an inlet (not shown), formed through the lower surface thereof, which in use contacts the surface to be cleaned, and a brush (not shown) having an approximately rectangular shape is formed on the lower surface, of the brush head 11 for agitating and dislodging dust from the surface to be cleaned.

The hand grip 12 allows the user in a standing position to easily manoeuvre the brush head 20, and also includes an operating unit 16 having a plurality of operating buttons for selecting various operating modes of the vacuum cleaner.

The connection hose 14 allows the user to move the brush head 11 and the extension pipe 13 by means of the hand grip 12 without moving the main body 10 within the proximity of the main body 10. The connection hose 14 is a pipe made of an elastically deformable material, such as plastic.

When the blowing fan 30 is powered by the driving motor 31 to generate a suction force, external air is sucked through the brush head 11 and passes through the extension pipe 13 and the connection hose 14, and is sucked into the main body 10. Thereafter, most of foreign substances are filtered out from the air through the foreign substance filter 21, and the purified air is then discharged to the outside of the vacuum cleaner through the outlet 10a, thereby, performing a cleaning operation.

In order to sterilize dust accumulated in the main body 10 for preventing bacteria from propagating in the main body 10, the vacuum cleaner of the present invention further comprises a nano particle generator 40 for generating nano particles of gold or silver having sterilizing power.

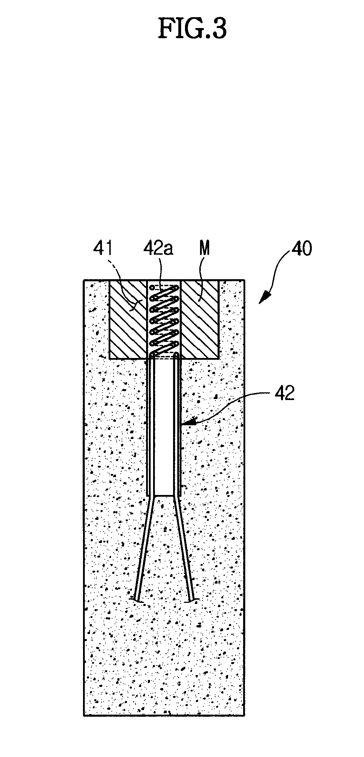

The nano particle generator 40 serves to generate nano particles by evaporating a material (M), such as gold or silver, by a heating process. In this embodiment, the nano particle generator 40, as shown in Figure 3, comprises a material-receiving portion 41 having a concave shape to receive the material (M) for generating the nano particles, and a heater 42 positioned in the material-receiving portion 41 such that the heater 42 contacts the material (M). An electrical heating wire 42a is wound in the material retaining portion 41 for directly heating the material (M). Accordingly, when power is applied to the heater 42 and the material-receiving portion 41 contains the material (M) contacting the heater 42, the surface of the material (M) is evaporated by the heat generated from the heater 42, into nano particles.

The nano particle generator 40 is connected in communication with an outlet and an inlet of the foreign substance filter 21. A subsidiary blowing fan 43 (see Figure 2) is installed in a communication channel between the nano particle generator 40 and the foreign substance filter 21 to force the air to flow from the outlet of the foreign substance filter 21 to the inlet of the foreign substance filter 21. In use, some of the filtered air, from the foreign substance filter 21 is introduced into the nano particle generator 40 through the subsidiary blowing fan 43 and is guided back to the inside of the foreign substance filter 21 together with the nano particles generated from the nano particle generator 40. Thereby, foreign substances, which are filtered out from the air by the foreign substance filter 21, are sterilized by the nano particles, and the sterilized air is discharged tooutside of the vacuum cleaner through the outlet 10a.

The vacuum cleaner of the present invention further comprises a damper 15 installed at an end of the connection hose 14 which closes the end of the connection hose 14 when a user wishes to perform an operation to sterilize the inside of the main body 10. In such an operation, the subsidiary blowing fan 43 is operated and the air in the main body 10 is introduced from the outlet of the foreign substance filter 21 to the nano particle generator 40 by the subsidiary blowing fan 43, and, as the damper 15 has closed the end of the connection hose 14, is supplied again to the foreign substance filter 21 together with the nano particles generated from the nano particle generator 40 so that the foreign substances filtered out by the foreign substance filter 21 are sterilized by the nano particles.

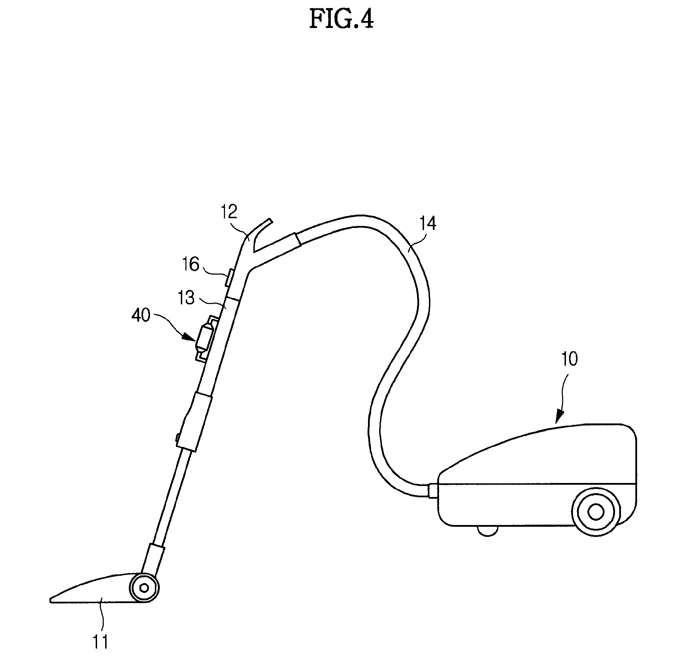

Although this embodiment describes the nano particle generator 40 installed in the main body 10, the position of the nano particle generator 40 is not limited thereto. As will now be described, a second embodiment of the present invention as shown in Figure 4, includes the nano particle generator 40 installed in the extension pipe 13 so that nano particles generated from the nano particle generator 40 are dispersed into air sucked into the main body 10 through the extension pipe 13.

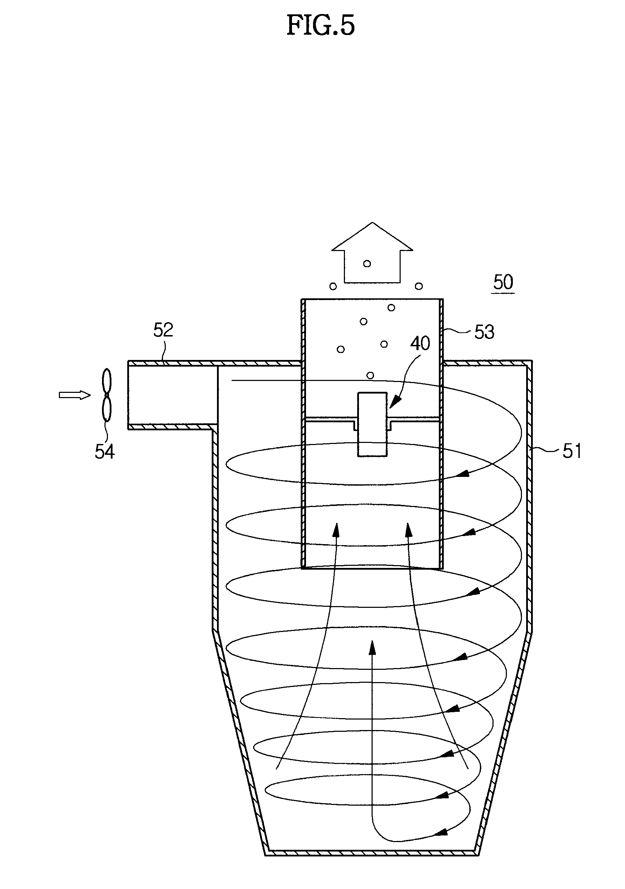

Hereinafter, a vacuum cleaner in accordance with a third embodiment of the present invention will be described in detail with reference to Figure 5 of the drawings, and comprises a cyclone-type dust and foreign substance collector 50. The cyclone-type dust collector 50 comprises a cyclone chamber 51, an upper portion thereof beingcylindrical in shape and a lower portion thereof being conical in shape.A suction pipe 52 is connected to the upper portion of the cyclone chamber 51 in a tangential direction to suck air therethrough and a discharge pipe 53 extends longitudinally into a central part of the upper portion of the cyclone chamber 51 to guide discharged air. A blowing fan 54 is provided to generate a suction force and a blowing force to discharge air to the inside of the cyclone chamber 51 through the suction pipe 52.

In use, the air discharged to the inside of the cyclone chamber 51 by the blowing fan 54, flows spirally along an inner surface of the cyclone chamber 51 and moves downwardly to reach the conical lower portion of the cyclone chamber 51. After the air has reached the lower portion of the cyclone chamber 51, it turns its flowing direction and flows in an axial direction of the cyclone chamber 51, and is discharged to the outside through the discharge pipe 53. Since a relatively high centrifugal force is applied to the foreign substances which are heavier than air, they move outwardly in a radial direction by centrifugal force collide with the inner wall of the cyclone chamber 51, and then drop down. Thereby, the foreign substances, such as dust, are separated from air and are accumulated in the lower portion of the cyclone chamber 51.

The vacuum cleaner of the present invention further comprises the nano particle generator 40 to generate nano particles of gold or silver which have sterilizing power, in order to sterilize the discharged air. The nano particle generator 40 of this embodiment is substantially the same as that of the first embodiment, and will thus not be described.

The nano particle generator 40 of this embodiment is positioned in a central part of the discharge pipe 53 in an axial direction, and disperses nano particles into air passing through the discharge pipe 53. Accordingly, even when bacteria propagate in the foreign substances accumulated in the cyclone chamber 51, the bacteria are sterilized by the nano particles generated from the nano particle generator 40 when the foreign substances are discharged to the outside of the vacuum cleaner through the discharge pipe 53. Thereby, only sterilized air is discharged to the outside of the vacuum cleaner.

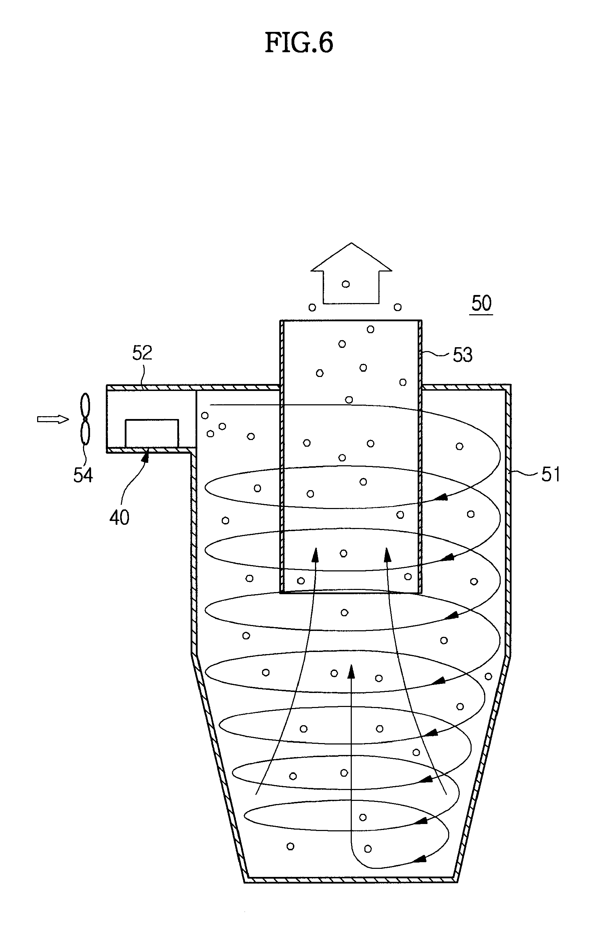

Although this embodiment describes the nano particle generator 40 as being installed in the central part of the discharge pipe 53, the position of the nano particle generator 40 is not limited thereto. As shown in a fourth embodiment of the present invention of Figure 6, the nano particle generator 40 may be installed in the suction pipe 52 so that nano particles generated from the nano particle generator 40 are dispersed into air supplied to the cyclone chamber 51 to sterilize both the foreign substances accumulated in the cyclone chamber and the air discharged to the outside of the vacuum cleaner.

It will be apparent from the above description that the present invention provides a vacuum cleaner having a nano particle generator to generate nano particles so that foreign substances accumulated in a main body of the vacuum cleaner or air discharged to the outside of the vacuum cleaner are sterilized, thereby creating a more hygienic device.

Although a few embodiments of the present invention have been shown and described, it will be appreciated by those skilled in the art that changes may be made in these embodiments without departing from the principles of the invention, the scope of which is defined in the claims hereafter.

## Claims

1. A vacuum cleaner having a dust collector, **characterised by** a sterilising particle generator operable to sterilise air drawn into and/or discharged from the vacuum cleaner.

2. A vacuum cleaner according to claim 1 wherein the dust collector comprises an air-permeable bag into which air containing dust and foreign matter is drawn, and the sterilising particle generator is connected between an inlet to the dust collector and the outside of the dust collector.

3. A vacuum cleaner according to claim 2 wherein a fan is provided to draw air that has been discharged through the bag, through the sterilising particle generator and into the inlet to the dust collector.

4. A vacuum cleaner according to claim 3 including a sealing means in the inlet to the dust collector operable to seal the inlet to enable a dedicated dust collector sterilising operation to be performed in which the fan circulates air from the outside of the dust collector, through the sterilising particle generator and into the inlet to the dust collector.

5. A vacuum cleaner according to claim 1 wherein the dust collector is a cyclone chamber.

6. A vacuum cleaner according to claim 5 wherein the sterilising particle generator is disposed in an inlet to the cyclone chamber.

7. A vacuum cleaner according to claim 5 wherein the sterilising particle generator is disposed in an outlet to the cyclone chamber.

8. A vacuum cleaner according to claim 1 or claim 5 including a suction conduit connected to the dust collector to guide the flow of air thereto, comprising a hose, a handle and an extension pipe, wherein the sterilising particle generator is disposed within the suction conduit.

9. A vacuum cleaner according to any preceding claim, wherein the sterilising particle generator comprises a housing having a chamber to receive a sterilising material, and a heater configured to heat the sterilising material.

10. A vacuum cleaner according to claim 9 wherein the sterilising material is silver.

11. A vacuum cleaner according to claim 9 wherein the sterilising material is gold.

12. A vacuum cleaner comprising:
a main body forming the external appearance thereof;
a blowing fan to generate a suction force to allow external air including foreign substances to be sucked into the main body; and
a nano particle generator to generate nano particles and to disperse the generated nano particles into the air sucked thereinto.

13. The vacuum cleaner as set forth in claim 12, further comprising a dust collector to filter out the foreign substances contained in the air flowing by the blowing fan.

14. The vacuum cleaner as set forth in claim 13, wherein the dust collector includes a foreign substance filter installed in a channel of the air blown by the blowing fan to filter out the foreign substances from the air passing therethrough.

15. The vacuum cleaner as set forth in claim 14, wherein:
the nano particle generator is positioned in the main body such that the nano particle generator is communicated with an outlet and an inlet of the foreign substance filter; and
a subsidiary blowing fan is provided in the main body to cause the air to flow from the outlet of the foreign substance filter to the inlet of the foreign substance filter through the nano particle generator.

16. The vacuum cleaner as set forth in claim 14, further comprising:
a brush head contacting a surface of a place to be cleaned;
an extension pipe connected with the brush head; and
a connection hose comprising an elastically deformable material to connect the extension pipe and the main body,
wherein the brush head, the extension pipe and the connection hose are connected with the main body, and the nano particle generator is installed in the extension pipe for dispersing the nano particle into air passing through the extension pipe.

17. The vacuum cleaner as set forth in claim 16, further comprising a damper is provided at an end of the connection hose to close one end of the connection hose close to the main body when it is necessary to sterilize an inside of the main body when the inside of the main body is not cleaned.

18. The vacuum cleaner as set forth in claim 13, wherein the dust collector comprises:
a cyclone chamber comprising an upper portion having a cylindrical shape and a lower portion having a conical shape;
a suction pipe connected with the cyclone chamber in a tangential direction; and
a discharge pipe positioned in a central part of the cyclone chamber in an axial direction.

19. The vacuum cleaner as set forth in claim 18, wherein the nano particle generator is positioned in the discharge pipe to disperse the nano particles into air discharged to an outside through the discharge pipe.

20. The vacuum cleaner as set forth in claim 18, wherein the nano particle generator is positioned in the suction pipe to disperse the nano particles into air supplied to the cyclone chamber through the suction pipe.

21. The vacuum cleaner as set forth in claim 12, wherein the nano particle generator comprises:
a material-receiving portion having a concave shape to receive a material used to generate the nano particles; and
a heater positioned in the material-receiving portion, such that the heater contacts the material received by the material-receiving portion, to generate heat to heat the material.

22. A vacuum cleaner comprising:
a main body forming the external appearance thereof;
a blowing fan to generate a suction force to allow external air including foreign substances to be sucked into the main body;
a dust collector to filter out the foreign substances contained in the air flowing by the blowing fan; and
a nano particle generator positioned at an inlet of the dust collector to generate nano particles and to disperse the generated nano particles into the air introduced into the dust collector.

23. A vacuum cleaner comprising:
a main body forming the external appearance thereof;
a blowing fan to generate a suction force to allow external air including foreign substances to be sucked into the main body;
a dust collector to filter out the foreign substances included in the air flowing by the blowing fan; and
a nano particle generator positioned at an outlet of the dust collector to generate nano particles and to disperse the generated nano particles into the air discharged from the dust collector.

24. The vacuum cleaner as set forth in claim 19, wherein the nano particle generator is positioned in a central part of the discharge pipe in an axial direction, and disperses nano particles into air passing through the discharge pipe to sterilize the air.
